# EUROPÄISCHE PATENTSCHRIFT

(11) **EP 2 697 179 B1**
(45) Veröffentlichungstag und Bekanntmachung des Hinweises auf die Patenterteilung: **01.03.2017**
(21) Anmeldenummer: 12724857.3
(22) Anmeldetag: 02.04.2012
(51) Int. Cl.: C03B 19/08, C03C 1/00, C03C 11/00

(54) **VERFAHREN ZUR HERSTELLUNG VON GLASSCHAUM UNTER WIEDERVERWERTUNG EINES ALTGLASGEMISCHES**
METHOD FOR PRODUCING FOAM GLASS BY RECYCLING A WASTE GLASS MIXTURE
PROCÉDÉ DE FABRICATION DE MOUSSE DE VERRE PAR RECYCLAGE D'UN MÉLANGE DE VERRES DE REBUT

(30) Priorität: 09.04.2011 DE 102011016606
(43) Veröffentlichungstag der Anmeldung: 19.02.2014
(73) Patentinhaber: TDC Trade, Development & Construction Limited, 06773 Gräfenhainichen (DE)
(72) Erfinder: BAIER, Ralf, 06785 Oranienbaum (DE); DANIEL, Rainer, 06846 Dessau-Roßlau (DE)
(74) Vertreter: Fischer, Volker
(86) Internationale Anmeldenummer: PCT/DE2012/000354
(87) Internationale Veröffentlichungsnummer: WO 2012/139550

(56) Entgegenhaltungen:
- EP-A1- 1 818 316
- DE-A1- 19 509 731
- DE-A1- 19 702 560
- BERNARDO E ET AL: "FOAM GLASS AS A WAY OF RECYCLING GLASSES FROM CATHODE RAY TUBES", GLASS SCIENCE AND TECHNOLOGY, DEUTSCHE GLASTECHNISCHE GESELLSCHAFT, OFFENBACH, DE, Bd. 78, Nr. 1, 1. Januar 2005 (2005-01-01) , Seiten 7-11, XP001224660, ISSN: 0946-7475
- MEAR F ET AL: "VALORISATION DE VERRES DE TUBES A RAYON CATHODIQUE (TRC). 2EME PARTIE: SYNTHESE DE VERRE EXPANSE//CATHODE RAY TUBE (CRT) GLASSES VALORIZATION. PART 2: FOAM GLASS SYNTHESIS", VERRE, INSTITUT DU VERRE, PARIS, FR, Bd. 9, Nr. 2, 1. April 2003 (2003-04-01), Seiten 72-77, XP001160140, ISSN: 0984-7979
- BAYER G: "SIC UND SI3N4 ALS BLAEHMITTEL BEI DER SCHAUMGLASHERSTELLUNG", SPRECHSAAL, VERLAG DES SPRECHSAAL MULLER UND SCHMIDT. COBURG, DE, Bd. 114, Nr. 5, 1. Mai 1981 (1981-05-01), Seiten 344-346, XP001197179, ISSN: 0341-0676
- DATABASE COMPENDEX [Online] ENGINEERING INFORMATION, INC., NEW YORK, NY, US; 2011, CHEN M ET AL: "A novel process for foam glass preparation from waste CRT panel glass", XP002680150, Database accession no. E20113014178292 & CHEN M ET AL: "A novel process for foam glass preparation from waste CRT panel glass", TMS ANNUAL MEETING - RECYCLING OF ELECTRONIC WASTE II - PROCEEDINGS OF THE 2ND SYMPOSIUM - HELD DURING THE TMS 2011 ANNUAL MEETING AND EXHIBITION 2011 MINERALS, METALS AND MATERIALS SOCIETY USA, 2011, Seiten 97-102,

## Beschreibung

Die Erfindung betrifft ein Verfahren zur Herstellung von Glasschaum unter Wiederverwertung eines Altglasgemisches, welches Bildschirmglas von Fernsehgeräten, Rechnern oder anderen Monitoren sowie Glas von Leuchtstoffröhren und/oder Enerpiesparlampen und/oder Photovoltaikanlagen enthält.

Im März des Jahres 2005 trat das Elektro- und Elektronikgerätegesetz (ElektroG) in Kraft. Grundlage des Gesetzes sind die europäische Richtlinie über Elektro- und Elektronik-Altgeräte (WEEE, 2002/96/EG vom 27.01.2003) und die europäische Richtlinie zur Beschränkung der Verwendung bestimmter gefährlicher Stoffe in Elektro- und Elektronikgeräten (RoHS, 2002/95/EG vom 27.01.2003).

Vorrangige Ziele des Elektro- und Elektronikgerätegesetzes sind die Vermeidung von Abfällen im Bereich der Elektro- und Elektronikaltgeräte, die Reduzierung der Abfallmenge durch Wiederverwendung, die Vorgabe von Sammel-, Verwertungs- und Recyclingquoten sowie die Verringerung des Schadstoffgehaltes der Geräte.

Zu den wesentlichen Punkten der getroffenen Regelungen zum Elektro- und Elektronikschrott gehören unter anderem:
- Die Hersteller müssen für die Behandlung der Altgeräte die Anwendung der besten verfügbaren Technik sicherstellen.
- Je nach Gerätekategorie sind zwischen 70 Prozent und 80 Prozent der eingesammelten und der einer Behandlung zugeführten Altgeräte zu verwerten, zwischen 50 Prozent und 75 Prozent sind dem stofflichen Recycling zuzuführen.

Weiterhin wird im Anhang III des Elektro- und Elektronikgerätegesetzes gefordert, dass unter anderem folgende Werkstoffe und Bauteile von den Entsorgern entfernt werden müssen:
- quecksilberhaltige Bauteile und
- Kathodenstrahlröhren.

Hierbei sind folgende Bauteile wie angegeben zu behandeln:
- Kathodenstrahlröhren: Entfernung der Leuchtschicht;
- Geräte mit ozonschädigenden oder den Treibhauseffekt begünstigenden Gasen: sachgerechte Entfernung und Behandlung der Gase und
- Gasentladungslampen: Entfernung des Quecksilbers.

Eine sogenannte "optimierte Umsetzung" des Elektro- und Elektronikgerätegesetzes besteht darin, dass alle im Anhang II der WEEE-Richtlinie aufgeführten Stoffe vollständig aus Elektro- und Elektronikaltgeräten entfernt werden und nach der Sortierung getrennt vorliegen. Die vorgeschriebenen Verwertungsquoten werden eingehalten. Kunststoffe werden, wenn möglich, getrennt und werkstofflich verwertet.

Hauptbestandteile des oben genannten Elektroschrotts sind dabei unter anderem technische Gläser unterschiedlichster chemischer Zusammensetzung sowie optischer und mechanischer Eigenschaften. Die Verwertung solcher Gläser im Sinne einer "optimierten Umsetzung" des Elektro- und Elektronikgerätegesetzes ist Aufgabe der vorliegenden Erfindung und somit Gegenstand der weiteren Betrachtungen.

Im Jahre 2001 waren etwa 30.000 bis 50.000 Tonnen gebrauchte Bildröhren auf dem Markt verfügbar. Eine Bildröhre macht ungefähr 58 Prozent der Gesamtmasse eines Bildröhrengerätes aus.

Die Anzahl der verwerteten Gasentladungslampen wird insgesamt mit 26.081.000 Stück beziffert. Durchschnittlich wiegt eine Leuchtstoffröhre 164 g (Mitteilung diverser Lampenhersteller). Folglich beträgt das Gewicht der verwerteten Gasentladungslampen etwa 3.750t. Dieser Bestand hat sich aufgrund der zwangsweisen Substitution konventioneller Glühfadenlampen durch sogenannte Energiespar- beziehungsweise Gasentladungslampen weiter erhöht und wird sich auch in Zukunft weiter erhöhen.

Zur verwerteten Menge von Gläsern aus Photovoltaik-Anlagen liegen keine Zahlen vor, jedoch dürfte auch hier das Aufkommen in den nächsten Jahren sprunghaft steigen.

Für die Verfahrensbetrachtung zum Ist-Stand der Recyclingverfahren von chemisch belasteten technischen Gläsern soll deshalb exemplarisch die Betrachtung der Entsorgung von Monitorglas aus Kathodenstrahlröhren sowie Gläsern von zu verwertenden Gasentladungslampen genügen.

Die bisherige Praxis der Behandlung beim Recycling beziehungsweise bei der Entsorgung von Monitorglas aus Kathodenstrahlröhren bestand darin, dass bei der Verwertung von Bildröhrengeräten davon ausgegangen wurde, dass ein geringer Teil (etwa 10 Prozent) der Bildröhren mechanisch in eine bleihaltige Konusglasfraktion und eine bleifreie Schirmglasfraktion getrennt wird. Der Rest der Bildröhren wird dann deponiert, dient als Verfüllungsmaterial für Untertagestollen, um Schäden durch Bergsetzungen zu verhindern (Schirmglas) oder wird in geringen Mengen als Zuschlagstoff in der Bleiverhüttung (Konusglas) eingesetzt. Weiterhin dient dieser Rest als Straßenbaumaterial und in der Keramikindustrie. Die Kunststofffraktion wird deponiert oder verbrannt.

Die optimierte Umsetzung des Elektro- und Elektronikgerätegesetzes im oben genannten Sinne besteht demgegenüber darin, dass alle Bildröhren dem Recyclingprozess zugeführt und zu Neuglas verarbeitet werden. Sie werden weder deponiert noch in den Bergversatz gegeben. Die Kunststofffraktion wird verbrannt.

Eine bekannte Methode der Neuglaserstellung im Sinne einer optimierten Umsetzung ist aus der DE 102 41 881 B3 bekannt, die ein Verfahren zum Recyceln von Bildschirmglas entsorgter Bildröhren beschreibt. Dieses Recyceln erfolgt typischerweise durch Aufbereitung des Bildschirmglases als Anteil für das Erschmelzen des Glases bei der Bildschirm-Herstellung. Die Notwendigkeit einer chemischen und optischen Analyse des Bildschirmglases, die einen hohen Aufwand zur Folge hatte und die Wirtschaftlichkeit früherer Verfahren zum Recyceln von Bildschirmglas maßgebend gefährdete, entfällt dabei. Die Glaszusammensetzung des Bildschirmrezyklats wird geschätzt, wobei Grundlagen für diese Schätzung die statistische Altersverteilung der zurückgegebenen Geräte und die Marktanteile der Glashersteller sind und anschließend ein iteratives Annähern an die reale Zusammensetzung und die entsprechende maximale Zugabemenge an Glasrezyklat erfolgt. Dazu erfolgt anfangs eine recht geringe Zugabe, zum Beispiel 2,5 Prozent an Glasrezyklat, so dass die Toleranzen der Schmelzzusammensetzung auch dann nicht überschritten werden, falls die Schätzung der Zusammensetzung weit von der wirklichen Zusammensetzung abweichen würde. Iterativ wird die Schätzung in der Zusammensetzung anhand einer Analyse der Schmelze korrigiert und die prozentuale Zugabemenge gesteigert, bis die maximal mögliche beziehungsweise die gewünschte Zugabemenge erreicht ist. Das Glasrezyklat kann dabei in Form von Schirmglasmehl oder von Schirmglasscherben vorliegen.

Da Monitorglas aufgrund der fortschreitenden Substitution von Bildröhren durch Flachmonitore so gut wie nicht mehr benötigt wird, ist die vorgenannte Methode durch den Stand der Technik überholt. Die Beimengung von Monitorglas zu Behälterglas ist aufgrund des unterschiedlichen Temperatur-/Viskositätsverlaufes der Gläser ebenfalls nur begrenzt möglich. Die Herstellung anderer neuer, hochwertiger optischer Gläser aus recycelten Monitorgläsern wird erschwert durch die zum Teil nur geringfügig unterschiedlichen optischen und mechanischen Eigenschaften der einzelnen Monitorglasfraktionen aufgrund unterschiedlicher Herstellerrezepturen und -daten.

Die bisherige Praxis der Behandlung beim Recycling von Glas aus Gasentladungslampen bestand darin, dass die Verwertung der Gasentladungslampen entweder nach einem produktspezifischen Zerlegeverfahren, zum Beispiel dem sogenannten Kappen-Trenn-Verfahren bei stabförmigen Leuchtstofflampen, oder nach einem produktunspezifischen Verfahren, das heißt, für alle Lampentypen geeigneten Schredder-Verfahren erfolgte.

Der Vorteil des Kappen-Trenn-Verfahrens liegt darin, dass das gewonnene Altglas wieder für die Produktion neuer Gasentladungslampen eingesetzt werden kann. Das Altglas, das beim Schredderverfahren anfällt, wird dagegen aufgrund schlechterer qualitativer Eigenschaften, zum Beispiel einem höheren Quecksilbergehalt, zum größten Teil als Bergversatzmaterial verwertet.

Die vorliegende Erfindung hat nicht zum Ziel, aus den oben genannten Gläsern Neuglas im Sinne von Glasschmelze herzustellen, sondern aus den Gläsern technisch hochwertigen Glasschaum zu produzieren.

Glasschaum ist ein anorganischer, leichter Werkstoff mit zumeist geschlossener Zellenstruktur, welcher eine Fülle technisch nutzbarer und energetisch günstiger Eigenschaften aufweist. Dazu gehören unter anderem eine hohe Wärmeisolationswirkung, eine kapillarbrechende Wirkung, eine hohe Druckfestigkeit (Flächenlast), eine Resistenz gegenüber Säuren und anderen Chemikalien, eine große Oberfläche und ein geringes Gewicht. Außerdem ist der Werkstoff recycelbar und weist eine positive ökologische Bilanz aus.

Die Herstellung von Glasschaum kann man im Wesentlichen in zwei Hauptverfahren unterscheiden:
Gemäß einer ersten Methode erfolgt die Glasschaumgewinnung durch Extrusion einer Glasschmelze bei Temperaturen oberhalb von 1050 °C unter Hinzugabe eines Blähmittels und anschließender Abkühlung bei gleichzeitigem, plötzlichem Druckabfall, welcher dann zu Schaumbildung führt. Diese erste Methode ist für das Gebiet der Erfindung ungeeignet, da aus den erhaltenen Produkten dieser Methode zumeist hochwertige Füterwerkstoffe für medizinische Zwecke oder Polymerfüllstoffe mit hochreaktiven Oberflächen und ähnliche Anwendungen gefertigt werden, welche keine metallischen Verunreinigungen zulassen, wie sie durch die metalloxidischen Bestandteile von zum Beispiel Bildschirmglas in die Schmelze gelangen würden. Ferner ist es aus fertigungstechnischen Gründen schwierig, Gläser mit stark unterschiedlichem Temperatur-/Viskositätsverlauf zu mischen und zu extrudieren. Daher sind im Rahmen dieser Methode nur geringe Beigaben von Bildschirmglas oder Leuchtstoffröhrenglas möglich. Auch eignet sich diese erste Methode nicht für großtechnische Anwendungen zur massenhaften Herstellung von Glasschaum und hat aufgrund der notwendigerweise hohen Prozesstemperatur eine sehr schlechte Energiebilanz.

Gemäß einer zweiten Methode erfolgt die Glasschaumherstellung aus thermisch gesintertem Glasmehl unter Hinzugabe eines zumeist aus mehreren Komponenten bestehenden Blähmittels, welches bei thermischer Behandlung im Temperaturbereich zwischen 810 °C - 950 °C durch Gasfreisetzung zu Bläschen- beziehungsweise Schaumbildung und damit zu einer Expansion der Glas-Sintermasse führt. Diese Methode weist eine erheblich bessere Energiebilanz auf als die oben beschriebene erste Methode. Die zweite Methode unterteilt sich weiterhin in die Untergruppen "Trockenverfahren" und das sogenannte "Nassverfahren", wobei sich die Untergruppen in der Art der Blähmittel und damit den hiervon abhängigen Prozesstemperaturen unterscheiden.

Beim Nassverfahren, welches beispielsweise in der US 5,516,351 A beschrieben ist, wird zusätzlich vor der thermischen Behandlung ein zumeist alkalisches Bindemittel in flüssiger Form in die Sintermasse eingebracht. Dieses kann zum Beispiel Wasserglas sein; auch andere Stoffe mit unter Wärmeeintrag frei werdenden OH-Gruppen sind üblich. Für den thermischen Prozess werden je nach Produkt Durchlauf- oder Kammeröfen benutzt. Ein entsprechendes Nassverfahren nach der zweiten Methode, das zur Verwertung von Bildröhrenglas angewendet wird, ist aus der DE 197 02 560 A1 bekannt. Dabei werden in einem ersten Arbeitsschritt nicht glashaltige von den glashaltigen Bestandteilen mechanisch abgetrennt, die glashaltigen Bestandteile in einem folgenden Arbeitsschritt mechanisch mittels einer Zerkleinerungseinrichtung vorzerkleinert und anschließend unter Zugabe von Hilfsstoffen für die spätere Formung und Schäumung auf eine Teilchengröße im Bereich von 1 µm -100 µm aufgemahlen. Danach werden die glashaltigen Bestandteile unter Befeuchtung mit Wasser in einer Granuliereinrichtung zu einem Rohgranulat geformt und durch Temperung im Sinterbereich des Glases bei Temperaturen < 1000 °C zu einem Schaumglasgranulat mit einer Körnung von 0,05 cm - 2,0 cm umgewandelt. Das hergestellte Schaumglasgranulat kann als Schüttmaterial für zum Beispiel Bodennivellierungsarbeiten und/oder als Füllstoff zur Eigenschaftsverbesserung von Produkten in Anteilen von 10 Volumenprozent - 80 Volumenprozent in diese Produkte eingebettet werden, wie beispielsweise in Gips, Zement und Kunststoffe.

Die DE 195 45 187 A1 beschreibt ein Mineralschaum-Granulat, das aus Kern und Außenschale aus jeweils unterschiedlichen Mineralschaumstrukturen besteht, und ein Verfahren und eine Vorrichtung zur Herstellung eines solchen Mineralschaum-Granulats. Dabei beträgt der Anteil von Scherben aus Endladungslampen bis zu 20 Prozent.

Nassverfahren nach der oben beschriebenen zweiten Methode sind für ein Recyclingverfahren mit der Zieistellung, technisch hochwertigen Glasschaum zu produzieren, weitgehend ungeeignet, da zum Beispiel Bildschirmglas (so wie auch Glas aus Leuchtstofflampen), wie schon oben erwähnt, viele Metalloxide enthält. Das zeigt auch die unter anderem aus der DE 4419 388 A1 bekannte typische Zusammensetzung von Bildschirmglas. Die DE 4419 388 A1 beschreibt ein Verfahren zum Recycling von Abfallmaterial in Form des Bildschirmglases von Bildschirmröhren aus Fernsehgeräten und von Computer-Monitoren. Die dort offenbarte typische Zusammensetzung enthält, jeweils in Gewichtsprozent: 55,0 SiO₂; 10,2 Na₂O; 9,1 PbO; 6,3 BaO; 6,0 K₂O; 5,8 SrO; 2,5 Al₂O₃; 1,8 CaO; 1,2 ZrO₂; 0,4 MgO; 0,2 TiO₂; 0,1 Fe₂O₃; 2,4 übrige Komponenten. Die Metalloxide können mit anderen alkalischen oder organischen Zuschlagstoffen reagieren. Zum Beispiel wird gemäß der WO 80/00696 als Blähmittel bei der Herstellung eines Schaumglas-Granulates eine kolloidale Dispersion eingesetzt, welche Wasser, Wasserglas und eine in Wasserglas lösliche Kohlenwasserstoffverbindung, vorzugsweise Glycerin, und vorzugsweise außerdem einen Alkalibentonit, insbesondere Natriumbentonit, enthält. Bei einem Nassverfahren nach der oben beschriebenen zweiten Methode würde es durch die hierbei verwendeten alkalischen und organischen Zuschlagstoffe zur Bildung von Salzen und anderen chemischen Reaktionen mit den Metalloxiden im entstehenden Glasschaum kommen, welche dann durch chemische beziehungsweise galvanische Korrosion im Endprodukt zu unerwünschter Freisetzung der enthaltenen Rest-Schwermetalle führen können.

Ein weiterer Nachteil der Nassverfahren besteht darin, dass allein der notwendige Trockenprozess der Sintermasse und die hierbei nötige Verdampfungswärme für die Phasenumwandlung eine ungünstige Energiebilanz des Nassverfahrens verursachen. Zudem würden beim Austreten des Wasserdampfes schwermetallhaltige Partikel mitgerissen werden, was erhebliche Schutzmaßnahmen im Fertigungsprozess zum Schutz der Umgebungsatmosphäre erfordert.

Somit verbleibt für ein Recyclingverfahren zur Herstellung von technisch hochwertigen Glasschaumes im Rahmen der zweiten Methode nur das oben erwähnte "Trockenverfahren". Hier werden aufgrund der gegenüber dem Nassverfahren höheren Prozess- beziehungsweise Schäumungstemperatur als Blähmittel (auch Aktivator genannt) zumeist anorganische Kohlenstoffträgersubstanzen, wie zum Beispiel Siliziumcarbid (SiC), verwendet. Zusätzlich können zur Verbesserung der Schaumbildung Metalloxide als Oxydatoren beigemengt werden.

Bei Erreichen einer typischen Schäumungstemperatur von 930 °C - 970 °C oxidiert der Kohlenstoff des Aktivators mit dem Sauerstoff der Umgebungsluft zu Kohlendioxid (CO₂). Auch verbindet sich der Sauerstoff der Metalloxide mit dem Kohlenstoff des Aktivators, was die Schaumbildung der bei dieser Temperatur erweichten und versinterten Glasmehlmasse verursacht.

Das bei der zweiten Methode im sogenannten Trockenverfahren verwendete Glasmehlgemisch besteht gewöhnlicherweise aus Behälteraltglas, welches aufgrund von zumeist farblichen Verunreinigungen von der Behälterglasindustrie nicht mehr eingeschmolzen wird, sowie - je nach gewünschten Eigenschaften des zu produzierenden Glasschaumes - einem Anteil von (Alt)-Flachglas, zum Beispiel aus Fensterscheiben oder Autoglas. Diese Glassorten können aufgrund ähnlicher Zusammensetzungen und (thermisch-mechanischer) Eigenschaften zu einem großen Anteil durch Gläser aus Leuchtstoffröhren, Energiesparlampen oder Photovoltaik-Anlagen substituiert werden, möglich waren bisher Anteile zwischen 10 Prozent - 70 Prozent, je nach gewünschten Eigenschaften des Endproduktes. Nachteilig ist jedoch, dass hier noch immer ein erheblicher Anteil von nicht kontaminiertem Altglas mit dem (Rest)-schadstoffbelasteten Glas vermischt wird, was nicht unbedingt im Sinne einer "optimierten Umsetzung" des Elektro- und Elektronikgesetzes ist. Eine hundertprozentige Substitution der nicht kontaminierten Altgläser durch Gläser aus Leuchtstoffröhren, Energiesparlampen oder Photovoltaik-Anlagen ist aufgrund der sich dann rapide verschlechternden mechanischen Eigenschaften des Glasschaumendproduktes in herkömmlicher Weise nicht möglich, da zum Beispiel Gläser aus Leuchtstoffröhren und Energiesparlampen nicht nur aus Gläsern vom Natronkalktyp hergestellt werden, sondern auch mit einer vom Behälterglas stark abweichenden repräsentativen Zusammensetzung, wie in der DE 697 01 439 T2 beschrieben (Angaben in Gewichtsprozent):
55 - 70 SiO₂; 2 - 6 Al₂O₃; 0,5 - 4 Li₂O; < 0,1 Na20; 10-15 K₂O; 0 - 3 MgO; 0 - 4 CaO; 4-7 SrO; 7-10 BaO; 0-0,5 CeO₂;
oder nach der DE 698 23 623 T2 folgende repräsentative Anteile enthalten (Angaben in Gewichtsprozent):
65 - 73 SiO₂; 1 - 5 Al₂O₃; 0,5 - 2 Li₂O; 5 - 10 Na₂O; 3 - 7 K₂O; 0,5 - 2 MgO; 1 - 3 CaO; 1 -10 SirO; 1 - 15 BaO; 0 - 3 B₂O₃; O - 2 Sb₂O₃; 0 - 0,5 Fe₂O₃; > 0 B₂O₃; > 0 Sb₂O₃; und somit auch andere thermisch-viskositäre Eigenschaften aufweisen.

Vorteilhaft wäre hier die Beigabe von Bildschirmglas in der schon beschriebenen typischen Zusammensetzung, da Bildschirmglas im kalten Zustand hervorragende mechanische Festigkeitswerte aufweist. Dies ist jedoch bei den bisher im Trockenverfahren üblichen Prozesstemperaturen von 920 °C - 960 °C aufgrund des stark unterschiedlichen Temperatur-Viskositätsverlaufes der Gläser nur bis zu einem geringfügigen Prozentsatz von maximal 5 Prozent Bildschirmglaszusatz möglich. Ursache hierfür ist die geringe Viskosität des Bildschirmglases bei dieser Temperatur. Es wird zu stark "erweicht" und führt bei einem größeren Prozentsatz als 5 Prozent zu einem "zerlaufenden", großporigen Schäumungswerkstoff, welcher nach dem Erkalten nur noch ungenügende mechanische Eigenschaften aufweist. Die US 2008/0236202 A1 beschreibt die Herstellung von Schaumglasgranulat in einem Tunnelofen, wobei das Glasmaterial, das als Rohmaterial in dem Prozess verwendet wird, aus verschiedenen Quellen stammen kann, darunter auch Lampenglas und Bildschirmglas. Der Tunnelofen umfasst zwei Heizbereiche. Im ersten Bereich wird das Ausgangsmaterial auf eine Temperatur im Bereich von 400 °C - 900 °C vorerhitzt. Im zweiten Bereich, dem Schäumungsbereich, wird das Glasmaterial dann auf eine Temperatur von über 900 °C erhitzt. Nachteilig ist an diesem Verfahren, dass das Glasgemisch für die Herstellung des Schaumglasgranulats aus den verschiedenen Quellen immer noch einen relativ hohen Anteil von mindestens 20 Prozent nicht oder wenig kontaminiertem Behälterglas erfordert und für den Schäumungsprozess Temperaturen von über 900 °C notwendig sind.

Die Druckschrift "Foam glass as a way of recycling glasses from cathod ray tubes" (Enrico Bernardo, Glass Sci. Technol. 78 (2005), Seiten 7-11) offenbart ein Trockenverfahren zur Herstellung von Glasschaum unter Wiederverwertung von Bildröhrenglas.

Es ist Aufgabe der vorliegenden Erfindung ein kostengünstiges und energiesparendes Verfahren bereitzustellen, mit dem die technischen Gläser, welche auch heute noch zum großen Teil im Bergversatz entsorgt werden, wieder in den Stoffkreislauf zurückzugeführt beziehungsweise zu neuen hochwertigen Produkten veredelt werden können.

Die Lösung der Aufgabe der Erfindung besteht in einem Verfahren zur Herstellung von Glasschaum unter Wiederverwertung eines Altglasgemisches, das Bildschirmglas von Fernsehgeräten, Rechnern oder anderen Monitoren (im Folgenden als "Bildschirmglas" bezeichnet) sowie Glas von Leuchtstoffröhren und/oder Energiesparlampen und/oder Photovoltaikanlagen enthält. Erfindungsgemäß umfasst das Verfahren die in folgender Reihenfolge ablaufenden Verfahrensschritte:
- getrenntes Vermahlen einzelner Fraktionen des Altglases, die aus verschiedenen Quellen stammen, zu Glasmehl,
- Mischen einer Glassintermasse aus Anteilen der verschiedenen Glasmehlfraktionen und einer anorganischen Kohlenstoffträgersubstanz als Aktivator ohne die Zugabe von Wasser oder anderen Flüssigkeiten im Trockenverfahren und
- thermische Behandlung der Glassintermasse, wobei die Glassintermasse zunächst einem Sinterprozess und später einem Schäumungsprozess unterworfen wird, der bei Temperaturen in einem Temperaturbereich von 855 °C-890 °C stattfindet, und der entstehende Glasschaum anschließend abgekühlt wird.

Erfindungsgemäß ist die Glassintermasse aus folgenden Gewichtsanteilen zusammengesetzt, angegeben in Gewichtsprozent: 15 - 45 Bildschirmglas; 10 - 83 Glas aus Leuchtstoffröhren und/oder Energiesparlampen und/oder Photovoltaikanlagen, 0 - 8 Behälterglas; 1 - 2 Aktivator, und ist die repräsentative chemische Zusammensetzung des verwendeten Bildschirmglases mit den folgenden Anteilen in Gewichtsprozent gegeben: 55,0 SiO₂; 10,2 Na₂O 9,1 PbO; 6,3 BaO; 6,0 K₂O 5,8 SrO; 2,5 Al₂O₃; 1,8 CaO; 1,2 ZrO₂; 0,4 MgO; 0,2 TiO₂; 0,1 Fe₂O₃; 1,4 übrige Komponenten, und ist die repräsentative chemische Zusammensetzung des Glases aus Leuchtstoffröhren und/oder Energiesparlampen und/oder Photovoltaikanlagen mit den folgenden Anteilen in Gewichtsprozent gegeben: 55 - 70 SiO₂; 2 - 6 Al₂O₃; 0,5 - 4 Li₂O; < 0,1 Na₂O; 10 - 15 K₂O; 0 - 3 MgO; 0 - 4 CaO; 4 - 7 SrO; 7 - 10 BaO; 0 - 0,5 CeO₂ oder enthält die folgenden repräsentativen Anteile in Gewichtsprozent: 65 - 73 SiO₂; 1 - 5 Al₂O₃; 0,5 - 2 Li₂O; 5 - 10 Na₂O; 3 - 7 K₂O; 0,5-2 MgO; 1 - 3 CaO; 1 - 10 SrO; 1 - 15 BaO; 0 - 3 B₂O₃; 0 - 2 Sb₂O₃; 0 - 0,5 Fe₂O₃; > 0 B₂O₃; > 0 Sb₂O₃.

Gemäß der Konzeption der Erfindung erfolgt gegenüber bisherigen Trockenverfahren zur Glasschaumherstellung eine Veränderung der Rezeptur, womit überraschenderweise eine wesentliche Verringerung der Prozesstemperatur einhergeht. Hierbei gerät der hohe Anteil verschiedenster Metalloxide im Bildschirmglas zum Vorteil, da bei einigen dieser Oxide schon weit unterhalb der üblichen Prozesstemperatur des Trockenverfahrens, die bei 920 °C - 960 °C liegt, der frei werdende Sauerstoff mit dem Kohlenstoff des Aktivators zu Kohlendioxid (CO₂) reagiert und damit einen Schäumungsprozess der versinterten Glasmehlmasse ermöglicht.

Umfangreiche Versuche haben ergeben, dass ein Temperaturbereich von 850 °C bis einschließlich 890 °C für die erfindungsgemäße Glasschaumbildung unter Beimengung von Bildschirmglas geeignet ist. In diesem Temperaturbereich bleibt die Viskosität des Bildschirmglases weitgehend konstant. Die geringere Viskosität des Bildschirmglases gegenüber den anderen Glasfraktionen in der Sintermasse birgt zudem den Vorteil einer besseren Wärmeleitung zwischen den Teilchen der Glasmasse im Sinterprozess und damit zu einer sehr gleichmäßigen, feinporigen Schaumbildung.

Als Blähmittel beziehungsweise Aktivator werden erfindungsgemäß anorganische Kohlenstoffträgersubstanzen, wie zum Beispiel Siliziumcarbid (SiC), verwendet. Für den thermischen Prozess werden bevorzugt Vorrichtungen verwendet, welche weitgehend gasdicht ausgeführt oder mit Unterdruck beaufschlagbar sind.

Der Anteil an weniger kontaminiertem Glas kann gegenüber bisher bekannten, vergleichbaren Verfahren deutlich reduziert beziehungsweise vollständig durch Bildschirmglas und Glas aus Leuchtstoffröhren und/oder Energiesparlampen und/oder Photovoltaikanlagen substituiert werden.

Der Schäumungsprozess wird vorzugsweise bei Temperaturen in einem Temperaturbereich von 855 °C - 880 °C durchgeführt.

Je nach Zusammensetzung lassen sich die gewünschten Glasschaumeigenschaften exakt einstellen, hier erweisen sich die qualitativ hochwertigen Eigenschaften des Bildschirmglases bezüglich mechanischer Festigkeit und Homogenität als besonders vorteilhaft.

Überraschenderweise lassen sich die Anteile aus nicht belastetem beziehungsweise nicht kontaminiertem Glas vollständig durch Bildschirmglas sowie Glas aus Leuchtstoffröhren und/oder Energiesparlampen oder Photovoltaik-Anlagen ersetzen, wie die untere Grenze des Anteils an Behälterglas von 0 Prozent in der Glassintermasse zeigt. Im Sinne einer "optimierten Umsetzung" des Elektro- und Elektronikgesetzes können vorzugsweise Gläser aus der gereinigten Schirmglasfraktion der Bildschirmgläser sowie von der Leuchtschicht befreite Gläser aus Leuchtstoffröhren beziehungsweise Gasentladungslampen und Energiesparlampen eingesetzt werden.

Als Endprodukte eignen sich besonders Glasschaumgranulat und Formkörper beziehungsweise Platten aus Glasschaum. Bei der Herstellung von Glasschaumplatten wird die Glassintermasse vor der thermischen Behandlung in thermisch beständige Formbehältnisse gegeben und mittels geeigneter Werkzeuge verdichtet. Bei der Herstellung von Glasschaumgranulat erfolgt ebenfalls eine Verdichtung der Glassintermasse; es werden jedoch keine Formbehältnisse benötigt. Glasschaumgranulat (Glasschaumschotter) ist ein mineralischer Leichtbaustoff, welcher im Allgemeinen der Wärmedämmung und Stabilisierung dient. Er ermöglicht wärmebrückenfreies Bauen. Seine Eigenschaften sind hohe Druckstabilität, Sicherheit vor Schädlingen und Unverrottbarkeit. Das Material ist FCKW-frei, nicht brennbar und leicht zu verarbeiten, da es als lose Schüttung in die Baugrube eingebracht wird.

Gemahlenes Glasschaumgranulat kann ferner als Zuschlagstoff für wärme- und geräuschisolierende sowie feuerfeste beziehungsweise schwer entflammbare Anstriche oder Betone eingesetzt werden.

Formkörper oder Platten aus Glasschaum bieten vielfältige Einsatzmöglichkeiten, zum Beispiel in der Bauindustrie zur Fassadenverkleidung, zum Schallschutz, zur Wärmeisolation von Rohrleitungen, als statische Stabilisatoren, als Flamm- und Feuerschutzmaßnahmen, als Filtergrundbausteine oder in biotechnischen Anwendungen.

Weitere Einzelheiten, Merkmale und Vorteile der Erfindung ergeben sich aus der nachfolgenden Beschreibung von Ausführungsbeispielen.

Dabei zeigt die Tabelle 1 Rezepturbeispiele und dazu angewendete (Prozess)-Werkstoff-Temperaturen, die sich als vorteilhaft für die Schäumung erwiesen haben:

**Tabelle 1**

| Nr. | Bildschirmglas in Prozent | Glas aus Leuchtstoffröhren und Energiesparlampen oder Solarzellen in Prozent | Behälterglas in Prozent | Aktivator in Prozent | Prozesstemperatur in °C |
|---|---|---|---|---|---|
| 1 | 40,0 | 50,0 | 8,0 | 2,0 | 855 |
| 2 | 15,0 | 83,0 | 0,0 | 2,0 | 870 |
| 3 | 30,0 | 68,5 | 0,0 | 1,5 | 880 |
| 4 | 45,0 | 53,0 | 0,0 | 2,0 | 855 |

Im Folgenden soll exemplarisch die erfindungsgemäße Herstellung von Formkörpern aus Glasschaum anhand der einzelnen Verfahrensschritte I bis IV beschrieben werden.

In einem ersten Verfahrensschritt I erfolgt ein Vorbrechen der Bildröhrenkörper. Hierbei wird das Bildschirmglas, welches getrennt in Konusglas beziehungsweise Bildröhrenglas angeliefert wird, sowie Glas aus Leuchtstoffröhren und Energiesparlampen mechanisch mittels einer geeigneten Vorrichtung, wie zum Beispiel einer Hammermühle oder einer Presse, zu einer Fraktionsgröße von maximal 30 mm - 50 mm zerkleinert. Bildröhrenglas beziehungsweise Konusglas sowie das Glas aus Leuchtstoffröhren und Energiesparlampen werden auch hier vorzugsweise getrennt behandelt, da sie sich jeweils in ihrer chemischen Zusammensetzung stark unterscheiden, jedoch können die einzelnen Glasfraktionen unterschiedlicher Hersteller bedenkenlos vermischt werden. Anschließend wird das gebrochene Glas sortenrein in geeignete Silos eingelagert.

In einem zweiten Verfahrensschritt II wird dann eine Vermahlung der vorgebrochenen Bildschirmglasfraktion durchgeführt. Nun werden mittels geeigneter, gekapselter Transportsysteme die Glasbruchfraktionen aus den Silos zu einer geeigneten Mühle, vorzugsweise einer Kugelmühle , transportiert und hierzu einer Fraktionsgröße von 50 µm - 80 µm vermahlen. Anschließend werden mittels geeigneter Maßnahmen, wie Sieben und/oder Sichten, letzte Verunreinigungen aus dem Glasmehl entfernt, welches dann wieder in entsprechenden Vorratssilos, sortenrein getrennt nach Bildschirmglas sowie Glas aus Leuchtstoffröhren und Energiesparlampen, zwischengelagert wird.

In Verfahrensschritt III erfolgt ein Mischen der Sintermasse. Hier werden die einzelnen Bestandteile der Sintermasse mittels geeigneter Dosiereinrichtungen vorzugsweise in einen Intensivmischer verbracht und - im Gegensatz zur in der DE 197 02 560 A1 beschriebenen Verfahrensweise - ohne die Zugabe von Wasser oder anderer Flüssigkeiten vermischt.

Vorzugsweise kann die Mischung in den in den Rezepturen der Tabelle 1 beschriebenen Massenverteilungen vorliegen, exemplarisch soll hier die Rezeptur mit der Nr. 3 verwendet werden. Somit stellen sich die einzelnen Massenbestandteile wie folgt dar:
- Bildschirmglas: 30,0 Prozent,
- Glas aus Leuchtstoffröhren und Energiesparlampen: 68,5 Prozent und
- Aktivator, hier Siliziumcarbid (SiC): 1,5 Prozent.

Das Siliziumcarbid (SiC) muss hierbei wegen der benötigten homogenen Verteilung in der Sintermasse in einer Fraktionsgröße von maximal 5 µm -10 µm vorliegen. Anschließend wird die Sintermasse in thermisch beständige Formbehältnisse gegeben und mittels geeigneter Werkzeuge, wie beispielsweise einer Walze, mit einem mechanischen Druck von 5 N/cm² bis zu 20 N/cm² verdichtet. Nun können die Formkästen mit der Sintermasse in einen geeigneten Ofen verbracht werden.

In einem weiteren Verfahrensschritt IV folgt dann die thermische Behandlung und der Schäumungsprozess. Als geeigneter Ofen kommt entweder ein Durchlaufofen mit angeschlossener Kühlstrecke zum Einsatz oder vorzugsweise ein Ofen, wie er in dem Gebrauchsmuster DE 20 2009 015 849.7 U1 beschrieben ist. Dieser Ofen umfasst einen Wärmeübertragungsraum mit einzelnen, horizontal übereinanderliegenden Wärmeübertragungseinheiten, wobei zwischen zwei Wärmeübertragungseinheiten jeweils eine Teilkammer ausgebildet ist und jede der auf diese Weise gebildeten, horizontal übereinanderliegenden Teilkammern dabei in einer separaten Wärmeübertragungszone regelbar ist. Der Ofen ist vorzugsweise gasdicht beziehungsweise mit Unterdruck beaufschlagbar auszuführen.

Die Sintermasse entsprechend der Rezeptur nach Nr. 3 aus Tabelle 1 wird dann im Ofen entsprechend folgendem Temperatur-Zeit-Profil wärmebehandelt:
IV 1 Aufheizen auf 840 °C in 60 min,
IV 2 Halten bei 840 °C für 20 min, wobei der Sinterprozess stattfindet,
IV 3 Aufheizen auf 880 °C in 20 min, wobei der Sinterprozess in einen Schäumungsprozess übergeht,
IV 4 Halten der Temperatur bei 880 °C für 30 min, wobei der Schäumungsprozess stattfindet,
In 5 Abkühlen auf 430 °C in 8 Stunden, wodurch ein spannungsarmer Abkühlprozess realisiert wird, und
IV 6 Abkühlen auf 50 °C in 3 Stunden, wodurch ebenfalls ein spannungsarmer Abkühlprozess gewährleistet wird.

Entsprechend vorgenannter Charakteristik produzierte Glasschaumkörper besitzen sehr gute mechanische und wärmeisolierende Eigenschaften.

Für die Herstellung von Glasschaumgranulat beziehungsweise Glasschaumschotter finden die Verfahrensschritte I - IV entsprechend Anwendung, mit dem Unterschied, dass hierbei keine Formbehältnisse benötigt werden. Als Ofen kommt für eine kontinuierliche Produktion sinnvollerweise ein Durchlaufofen zum Einsatz, jedoch ohne angeschlossene Kühlstrecke. Die Sintermasse wird dabei am Ofeneinlauf in Endlosschüttung als ca. 2 cm - 4 cm hoher Belag über eine Dosiereinrichtung, zum Beispiel eine Dosierschnecke, auf das Transportband des Ofens verbracht und hier mittels einer Walze, wie unter Verfahrensschritt III beschrieben, mechanisch verdichtet.

Das unter Verfahrensschritt IV beschriebene Temperatur-Zeit-Profil der Wärmebehandlung wird über die Länge und/oder Transportbandgeschwindigkeit eingestellt; auf die spannungsarme Abkühlung der Programmschritte IV 5 und IV 6 der Wärmebehandlung wird verzichtet, dafür wird am Auslauf des Ofens der entstandene Endlos-Glasschaumbelag mit Kaltluftströmung beaufschlagt, worauf dieser aufgrund entstehender Eigenspannungen in Granulat- beziehungsweise Glasschaumschotter-Fraktionen von ca. 30 mm - 60 mm zerbricht und danach gelagert beziehungsweise zum Transport verpackt oder für andere Kombinationsprodukte weiter fraktioniert und gemahlen wird.

Es wird weder bei der Herstellung von Glasschaumplatten noch bei der Herstellung von Glasschaumschotter vor der thermischen Bearbeitung ein Granulat geformt, sondern das Glasmehlgemisch mit enthaltenem Aktivator entweder als kontnuierliche Endlosschüttung beziehungsweise Endlosbelag (bei der Glasschaumschotterherstellung) oder als intermittierende Schüttung (bei der Herstellung von Schaumglasplatten) auf das Transportband des Durchlaufofens dosiert beziehungsweise in Formkästen für Formteile verfüllt. Das Vorformen zu Granulat würde zu einem geringeren Fertigungsvolumen bei gleicher Ofengröße und damit zwangsläufig zu einem höheren Energieverbrauch beziehungsweise Fertigungsvolumen führen, da die Hauptwärmekapazität vom Transportband des Ofens aufgenommen wird. Durch das erfindungsgemäße Verfahren werden diese Nachteile vermieden. Somit ist das Verfahren für eine Massenfertigung und gleichzeitig für eine Entsorgungslösung geeignet.

## Patentansprüche

1. Verfahren zur Herstellung von Glasschaum unter Wiederverwertung eines Altglasgemisches, enthaltend Bildschirmglas von Fernsehgeräten, Rechnern oder anderen Monitoren sowie Glas von Leuchtstoffröhren und/oder Energiesparlampen und/oder Photovoltaikanlagen, umfassend die in folgender Reihenfolge ablaufenden Verfahrensschritte:
• getrenntes Vermahlen einzelner Fraktionen des Altglases, die aus verschiedenen Quellen stammen, zu Glasmehl,
• Mischen einer Glassintermasse aus Anteilen der verschiedenen Glasmehlfraktionen und einer anorganische Kohlenstoffträgersubstanz als Aktivator ohne die Zugabe von Wasser oder anderen Flüssigkeiten im Trockenverfahren und
• thermische Behandlung der Glassintermasse, wobei die Glassintermasse zunächst einem Sinterprozess und später einem Schäumungsprozess unterworfen wird, der bei Temperaturen in einem Temperaturbereich von 855 °C-890 °C stattfindet, und der entstehende Glasschaum anschließend abgekühlt wird,
wobei die Glassintermasse zu 15 Gewichtsprozent - 45 Gewichtsprozent aus Bildschirmglas, zu 10 Gewichtsprozent - 83 Gewichtsprozent aus Glas von Leuchtstoffröhren und/oder Energiesparlampen und/oder Photovoltaikanlagen, zu 0 Gewichtsprozent - 8 Gewichtsprozent aus Behälterglas und zu 1 Gewichtsprozent - 2 Gewichtsprozent aus dem Aktivator zusammengesetzt ist, und dass die repräsentative chemische Zusammensetzung des verwendeten Bildschirmglases mit den folgenden Anteilen in Gewichtsprozent gegeben ist: 55,0 SiO₂; 10,2 Na₂O; 9,1 PbO; 6,3 BaO; 6,0 K₂O; 5,8 SrO; 2,5 Al₂O₃; 1,8 CaO; 1,2 ZrO₂; 0,4 MgO; 0,2 TiO₂; 0,1 Fe₂O₃; 1,4 übrige Komponenten, und dass die repräsentative chemische Zusammensetzung des verwendeten Glases aus Leuchtstoffröhren und/oder Energiesparlampen und/oder Photovoltaikanlagen mit den folgenden Anteilen in Gewichtsprozent gegeben ist: 55-70 SiO₂; 2-6 Al₂O₃; 0,5-4 Li₂O; < 0,1 Na₂O; 10 - 15 K₂O; 0 - 3 MgO; 0 - 4 CaO; 4 - 7 SrO; 7 - 10 BaO; 0-0,5 CeO₂ oder folgende, repräsentative Anteile in Gewichtsprozent enthält: 65-73 SiO₂; 1 - 5 Al₂O₃; 0,5 - 2 Li₂O; 5-10 Na₂O; 3 - 7 K₂O; 0,5 - 2 MgO; 1 - 3 CaO; 1 - 10 SrO; 1 - 15 BaO; 0 - 3 B203; 0 - 2 Sb203; 0 - 0,5 Fe₂O₃; > 0 B₂O₃ >0 Sb₂O₃.

2. Verfahren nach Anspruch 1,
**dadurch gekennzeichnet, dass**
als Aktivator Siliziumcarbid (SiC) verwendet wird.

3. Verfahren nach Anspruch 1 oder 2,
**dadurch gekennzeichnet, dass**
für den thermischen Prozess Vorrichtungen verwendet werden, welche weitgehend gasdicht ausgeführt oder mit Unterdruck beaufschlagbar sind.

4. Verfahren nach einem der Ansprüche 1 bis 3,
**dadurch gekennzeichnet, dass**
der Schäumungsprozess bei Temperaturen in einem Temperaturbereich von 855 °C bis 880 °C durchgeführt wird.

## Claims

1. Process for producing glass foam with reuse of a waste glass mixture containing visual display unit glass from televisions, calculators or other monitors and also glass from fluorescent tubes and/or energy-saving lamps and/or photovoltaic units, which comprises the following process steps in the order indicated:
• separate milling of individual fractions of the waste glass which originate from different sources to give glass flour,
• mixing of a glass sintering composition from proportions of the various glass flour fractions and an inorganic carbon carrier substance as activator without addition of water or other liquids in a dry process and
• thermal treatment of the glass sintering composition, wherein the glass sintering composition is firstly subjected to a sintering process and later to a foaming process which takes place at temperatures in the temperature range 855°C-890°C, and the glass foam formed is subsequently cooled, wherein
the glass sintering composition is composed of 15% by weight-45% by weight of visual display unit glass, 10% by weight-83% by weight of glass from fluorescent tubes and/or energy-saving lamps and/or photovoltaic units, 0% by weight-8% by weight of container glass and 1% by weight-2% by weight of the activator and the representative chemical composition of the visual display unit glass used has the following proportions in percent by weight: 55.0 SiO₂; 10.2 Na₂O; 9.1 PbO; 6.3 BaO; 6.0 K₂O; 5.8 SrO; 2.5 Al₂O₃; 1.8 CaO; 1.2 ZrO₂; 0.4 MgO; 0.2 TiO₂; 0.1 Fe₂O₃; 1.4 other components and the representative chemical composition of the glass from fluorescent tubes and/or energy-saving lamps and/or photovoltaic units which is used has the following proportions in percent by weight: 55-70 SiO₂; 2.6 Al₂O₃; 0.5-4 Li₂O; < 0.1 Na₂O; 10-15 K₂O; 0-3 MgO; 0-4 CaO; 4-7 SrO; 7-10 BaO; 0-0.5 CeO₂ or contains the following representative proportions in percent by weight: 65-73 SiO₂; 1-5 Al₂O₃; 0.5-2 Li₂O; 5-10 Na₂O; 3-7 K₂O; 0.5-2 MgO; 1-3 CaO; 1-10 SrO; 1-15 BaO; 0-3 B₂O₃; 0-2 Sb₂O₃; 0-0. 5 Fe₂O₃; > 0 B₂O₃ > 0 Sb₂O₃.

2. Process according to Claim 1, **characterized in that** silicon carbide (SiC) is used as activator.

3. Process according to Claim 1 or 2, **characterized in that** apparatuses which are largely gastight or to which subatmospheric pressure can be applied are used for the thermal process.

4. Process according to any of Claims 1 to 3, **characterized in that** the foaming process is carried out at temperatures in a temperature range from 855°C to 880°C.

## Revendications

1. Procédé de fabrication de mousse de verre par recyclage d'un mélange de verres de rebut, contenant du verre d'écrans de téléviseurs, d'ordinateurs ou d'autres moniteurs ainsi que du verre de tubes fluorescents et/ou de lampes à économie d'énergie et/ou d'installations photovoltaïques, ledit procédé comprenant les étapes suivantes qui se succèdent dans l'ordre suivant :
• broyage séparé de fractions isolées de verre de rebut provenant d'origines différentes, pour former du verre pulvérisé,
• mélange d'une fritte de verre composée de parts des différentes fractions de verre pulvérisé et d'une substance support de carbone inorganique comme activateur sans adjonction d'eau ou d'autres liquides dans le processus de séchage et
• traitement thermique de la fritte de verre, cette dernière étant d'abord soumise à un processus de frittage, puis à un processus de moussage qui a lieu à des températures situées dans une plage de 855 à 890 °C, la mousse de verre obtenue étant ensuite refroidie,
la fritte de verre étant composée de 15 pour cent en poids à 45 pour cent en poids de verre d'écrans, de 10 pour cent en poids à 83 pour cent en poids de verre de tubes fluorescents et/ou de lampes à économie d'énergie et/ou d'installations photovoltaïques, de 0 pour cent en poids à 8 pour cent en poids de verre de récipients et de 1 pour cent en poids à 2 pour cent en poids d'activateur, et la composition chimique représentative du verre d'écrans utilisé étant donnée par les parts suivantes en pour cent en poids : 55,0 Si0₂ ; 10,2 Na₂0 ; 9,1 PbO ; 6,3 BaO ; 6,0 K₂0 ; 5,8 SurO ; 2,5 Al₂0₃ ; 1,8 CaO ; 1,2 ZrO₂ ; 0,4 MgO ; 0,2 TiO₂ ; 0,1 Fe₂O₃ ; 1,4 autres composantes, et la composition chimique représentative du verre utilisé issu de tubes fluorescents et/ou de lampes à économie d'énergie et/ou d'installations photovoltaïques étant donnée par les parts suivantes en pour cent en poids : 55 - 70 SiO₂ ; 2 - 6 Al₂O₃ ; 0,5 - 4 Li₂O ; < 0,1 Na₂O ; 10 - 15 K₂O ; 0 - 3 MgO ; 0 - 4 CaO ; 4 - 7 SrO ; 7 - 10 BaO ; 0 - 0,5 CeO₂ ou contenant les parts représentatives suivants en pour cent en poids : 65 - 73 SiO₂ ; 1 - 5 Al₂O₃ ; 0,5 - 2 Li₂O ; 5 - 10 Na₂O ; 3 - 7 K₂O ; 0,5 - 2 MgO ; 1 - 3 CaO ; 1 - 10 SrO ; 1 - 15 BaO ; 0 - 3 B₂O₃ ; 0 - 2 Sb₂O₃ ; 0 - 0,5 Fe₂O₃ ; > 0 B₂O₃ > 0 Sb₂O₃.

2. Procédé selon la revendication 1,
**caractérisé en ce que**
l'on utilise du carbure de silicium (SiC) comme activateur.

3. Procédé selon la revendication 1 ou la revendication 2,
**caractérisé en ce que**
l'on utilise pour le processus thermique des dispositifs qui sont en grande partie étanches aux gaz ou qui peuvent être soumis à une dépression.

4. Procédé selon l'une des revendications 1 à 3,
**caractérisé en ce que**
le processus de moussage est effectué à des températures situées dans une plage de 855 à 880 °C.
